Europäisches Patentamt

European Patent Office

Office européen des brevets

(19)

(11) **EP 1 536 630 A1**

(12) **EUROPÄISCHE PATENTANMELDUNG**

(43) Veröffentlichungstag:
01.06.2005 Patentblatt 2005/22

(51) Int Cl.⁷: **H04N 1/60**

(21) Anmeldenummer: **03027377.5**

(22) Anmeldetag: **27.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **LOGO Beteiligungsges. mbH**
**48565 Steinfurt-Borghorst (DE)**

(72) Erfinder:
• **Fuchs, Dietmar**
**48143 Münster (DE)**
• **Ammeter, Harald**
**8032 Zürich (CH)**

(74) Vertreter: **Schwabe - Sandmair - Marx**
**Stuntzstrasse 16**
**81677 München (DE)**

(54) **Verfahren zur Erstellung eines Farbprofils für eine Digitalkamera**

(57)      Zur Erstellung eines Farbprofils für eine Digitalkamera wird eine grafische Benutzeroberfläche (100) zur Verfügung gestellt, die die Eingabe bzw. Einstellung bzw. Auswahl von das Transformationsverhalten des zu erstellenden Profils (P) charakterisierenden Reproduktionseinflussgrössen erlaubt. Aus den eingegebenen bzw. eingestellten bzw. ausgewählten Reproduktionseinflussgrössen werden entsprechende Optimierungsvorschriften (130) für die Optimierung der Parameter (23,24) des für die Profilberechnung verwendeten Modells (20) der Digitalkamera und/oder entsprechende Korrekturvorschriften (140) für die Tabellenwerte (2) des Profils (P) ermittelt. Die Optimierung der Parameter (23,24) des Modells (20) der Digitalkamera wird anhand dieser Optimierungsvorschriften (130) durchgeführt, und die Tabellenwerte (2) des Profils (P) werden gemäss diesen Korrekturvorschriften (140) verändert.

Die verschiedenen Reproduktionseinflussgrössen werden zu sinnvollen Kombinationen zusammengefasst und dem Anwender mit passenden Voreinstellungen über die Benutzeroberfläche (100) zur Auswahl bzw. individuellen Einstellung angeboten.

Der Anwender kann dadurch empfindungsmässige und individual-geschmackliche Aspekte der Farbreproduktion sowie aus der klassischen analogen Fotografie bekannte Einflussnahmen auf die Farbreproduktion auf einfache und intuitive Weise vornehmen und in die Profilerstellung einfliessen lassen.

**Fig. 1**

EP 1 536 630 A1

## EP 1 536 630 A1

**Beschreibung**

Die Erfindung betrifft ein Verfahren zur Erstellung eines Farbprofils für eine Digitalkamera gemäss dem Oberbegriff des unabhängigen Anspruchs 1.

Color Management und Color Management Systeme sind an sich bekannt und werden in digitalen Farbreproduktionssprozessen allgemein eingesetzt. Eine umfassende und übersichtliche Darstellung der Hintergründe, Technologien und Anwendungen von Color Management Systemen findet sich in der von der Firma Logo GmbH, einer Gesellschaft der Gretag-Macbeth Gruppe, im August 1999 herausgegebenen Publikation "Postscriptum on Color Management, Philosophy and Technology of Color Management" der Autoren Stefan Brües, Liane May und Dietmar Fuchs. Eine weitere Abhandlung über Color Management findet sich beispielsweise im Kapitel 17 "Device-Independent Color Imaging" des Buchs "Color Appearance Models" von Mark D. Fairchild, erste Auflage, herausgegeben 1997 von Addison Wesley.

Farbprofile oder allgemein Geräteprofile spielen eine zentrale Rolle im Color Management. Sie dienen zur eindeutigen Farbwerttransformation zwischen einem gerätespezifischen Farbraum und einem geräteunabhängigen Farbraum. Digitalkameras liefern als Ausgangssignale üblicherweise RGB-Farbwerte, entsprechend ist der gerätespezifische Farbraum dür Digitalkameras der RGB-Farbraum. Als geräteunabhängiger Farbraum wird meistens der CIE-Lab-Farbraum benutzt. Farbprofile für Digitalkameras transformieren somit die RGB-Farbwerte der Digitalkamera in entsprechende CIE-LAB-Farbwerte.

Farbprofile sind bezüglich ihres grundsätzlichen Aufbaus üblicherweise genormt. Eine bekannte und allgemein übliche Norm ist die nach ICC (International Color Consortium www.color.org, Spezifikation nach ICC www.color. org/icc_specs2.html). Dieser Norm entsprechende Farbprofile werden daher häufig auch als ICC-Profile bezeichnet. Geräteprofile werden in Ausgabegeräteprofile und Eingabegeräteprofile unterteilt. Ausgabegeräteprofile werden im Zusammenhang mit durch Farbwertdaten angesteuerten Ausgabegeräten (Drucker, Bildschirme, Beamer etc.) verwendet, Eingabegeräteprofile entsprechend mit Farbwertdaten erzeugenden Eingabegeräten (Scanner, Digitalkameras etc.).

Die Erstellung (Berechnung) von Farbprofilen erfolgt üblicherweise unter Verwendung einer Farbtafel, die eine repräsentative Auswahl von unterschiedlichen Farbfeldern aufweisen, deren Farbwerte im zugrundegelegten geräteunabhängigen Farbraum (z.B. durch Messung mit einem geeichten und hochpräzisen Farbmessgerät) bekannt sind. Für ein Eingabefarbprofil wird die Farbtafel durch das betreffende Eingabegerät digitalisiert, d.h. es werden für jedes Farbfeld die zugehörigen Farbwerte im gerätespezifischen Farbraum des Eingabegeräts erzeugt. Aus diesen beiden Datensätzen - den Farbwerten der Farbfelder im geräteunabhängigen Farbraum und den Farbwerten der Farbfelder im gerätespezifischen Farbraum - wird dann mit mathematischen Methoden das Farbprofil für das Eingabegerät berechnet, wobei auch verschiedene standardisierte Reproduktionskriterien (Rendering Intents) berücksichtigt werden. Bei diesen Reproduktionskriterien wird zwischen den Moden "Perceptual" (gleicher Farbeindruck im Bild), "Relativ Colorimetric", "Absolute Colorimetric" und "Saturation" unterschieden, welche im Dokument ICC-1:1998-09 des ICC (International Color Consortium) definiert sind. Für die Berechnung des Farbprofils kann z.B. das Software-Paket "Profile Maker Pro" der vorstehend erwähnten Firma Logo GmbH, einer Gesellschaft der Gretag-Macbeth Gruppe, eingesetzt werden.

Nach diesen allgemeinen Grundsätzen bzw. Vorgehensweisen erzeugte Farbprofile für Digitalkameras berücksichtigen nur die rein farbmetrischen Eigenschaften und standardisierten Reproduktionskriterien, genügen aber empfindungsmässigen und individual-geschmacklichen Aspekten der Farbreproduktion nicht oder nur bedingt. Speziell professionelle Fotografen und fortgeschrittene Amateure stellen höhere Ansprüche insofern, als sie die von der analogen (klassischen) Fotografie bekannten Einflussmöglichkeiten auf die Farbwiedergabe auch in der digitalen Fotografie anwenden möchten. Zu diesen Einfluss- bzw. Gestaltungsmöglichkeiten gehören z.B. der Einsatz verschiedener Filmtypen und die Verwendung unterschiedlicher Beleuchtungsarten bei der Aufnahme. Ein weiteres Problem konventionell erstellter Farbprofile besteht in der Behandlung von Sonderfarben (Spot Colors) sowie in häufig auftretenden unerwünschten Farbtönungen bei nahe der Grau-Achse liegenden Farben.

Allgemeinstes Ziel der vorliegenden Erfindung ist es daher, die Erstellung von Farbprofilen für Digitalkameras so zu verbessern, dass einerseits den vorstehend erwähnten höheren Ansprüchen genüge getan wird bzw. anderseits die vorstehend erwähnten Schwierigkeiten bei herkömmlichen Farbprofilen überwunden werden.

Konkreter soll durch die Erfindung bei der Profilerstellung die Möglichkeit geboten werden, z.B. aus der klassischen analogen Fotografie bekannte Einflussnahmen auf die Farbreproduktion auf einfache und intuitive Weise vorzunehmen und in die Profilerstellung einfliessen zu lassen. Weiter soll durch die Erfindung die Möglichkeit geboten werden, bei der Profilerstellung Sonderfarben speziell zu berücksichtigen und vorzugsweise auch Farben in der Nähe der Grau-Achse gesondert zu behandeln.

Diese der Erfindung zugrundeliegende allgemeine Aufgabe wird durch das durch die Merkmale des unabhängigen Anspruchs 1 gekennzeichnete erfindungsgemässe Farbprofilerstellungsverfahren gelöst.

Vorteilhafte Ausgestaltungen und Weiterbildungen des erfindungsgemässen Verfahren sind Gegenstand der abhängigen Ansprüche.

Im folgenden wird die Erfindung anhand der Zeichnung näher erläutert. Es zeigen:

Fig. 1 ein Prinzip-Blockschema eines Ausführungsbeispiels des erfindungsgemässen Verfahrens zur Erstellung eines Farbprofils für eine Digitalkamera,

Fig. 2 die Struktur eines ICC-Farbprofils,

Fig. 3 ein Prinzip-Blockschema eines Profilgenerators mit einem darin enthaltenen mathematischen Modell einer Digitalkamera,

Fig. 4 ein Blockschema diverser Teilschritte des Verfahrens,

Fig. 5-8 beispielsweise Graphen von typischen Korrekturfunktionen und

Fig. 9-10 beispielsweise Ausgestaltungsmöglichkeiten für eine grafische Benutzeroberfläche.

Die Erfindung wird nachstehend am Beispiel der Erstellung eines ICC-Farbprofils beschrieben, wobei als gerätespezifischer Farbraum der RGB-Farbraum und als geräteunabhängiger Farbraum der CIE-Lab-Farbraum zugrundegelegt sind. Das erfindungsgemässe Verfahren ist jedoch nicht darauf beschränkt, sondern lässt sich sinngemäss auch für andere Farbraumkombinationen und Farbprofil-Typen anwenden.

Ausgangspunkt für die Erstellung eines Farbprofils gemäss der Erfindung ist eine körperliche Farbtafel FT mit einer repräsentativen Anzahl von unterschiedlich gefärbten Farbfeldern FF, deren Farbwerte über den gesamten interessierenden Farbraum verteilt sind. Üblicherweise wird eine zweidimensionale Anordnung von Farbfeldern gewählt, andere Konfigurationen sind jedoch ebenso möglich. Zu jedem Farbfeld der Farbtafel sind die zugehörigen Farbwerte in einem geräteunabhängigen Farbraum, hier also dem CIE-Lab-Farbraum bekannt. Diese Farbwerte können z.B. durch Ausmessen mit einem hochpräzisen Farbmessgerät ermittelt werden. Üblicherweise erfolgt dies bereits durch den Hersteller der Farbtafel. Die CIE-Lab-Farbwerte sind zweckmässigerweise in einer digitalen Datei abgespeichert. Die Gesamtheit der CIE-Lab-Farbwerte aller Farbfelder der Farbtafel wird im folgenden als Referenzdaten DR bezeichnet.

Alternativ können anstelle der CIE-Lab-Farbwerte auch die Remissionsspektren der Farbfelder der Farbtafel gemessen werden oder vorliegen, wobei die Gesamtheit aller Remissionsspektren als spektrale Messdaten DS bezeichnet werden. Aus den spektralen Messdaten können nach den bekannten Normen der CIE (Commission Internationale de l'Eclairage) die Lab-Farbwerte bzw. Referenzdaten DR berechnet werden.

Als nächstes wird mit der Digitalkamera K, für welche ein Farbprofil P erstellt werden soll, eine Aufnahme der Farbtafel FT gemacht. Dabei erzeugt die Kamera K für jeden aufgenommenen Bildpunkt einen Farbwert im gerätespezifischen Farbraum der Kamera, hier also im RGB-Farbraum. Aus den RGB-Farbwerten aller aufgenommenen Bildpunkte werden nach an sich bekannten Methoden die RGB-Farbwerte der einzelnen Farbfelder FF der Farbtafel FT entnommen. Die Gesamtheit der RGB-Farbwerte der Farbfelder wird im folgenden als Kameradaten DK bezeichnet.

Aus den Referenzdaten DR und den Kameradaten DK wird nun das Profil P berechnet. Bisher erfolgte dies so, dass die Kameradaten und die Referenzdaten direkt oder nach einer chromatischen Anpassung einem handelsüblichen Profilgenerator PG zugeführt wurden, welcher daraus das Profil P berechnete und im standardisierten ICC-Format abspeicherte. Ein geeigneter Profilgenerator ist z.B. im Software-Paket "Profile Maker Pro" der eingangs erwähnten Firma Logo GmbH, einer Gesellschaft der Gretag-Macbeth Gruppe, enthalten.

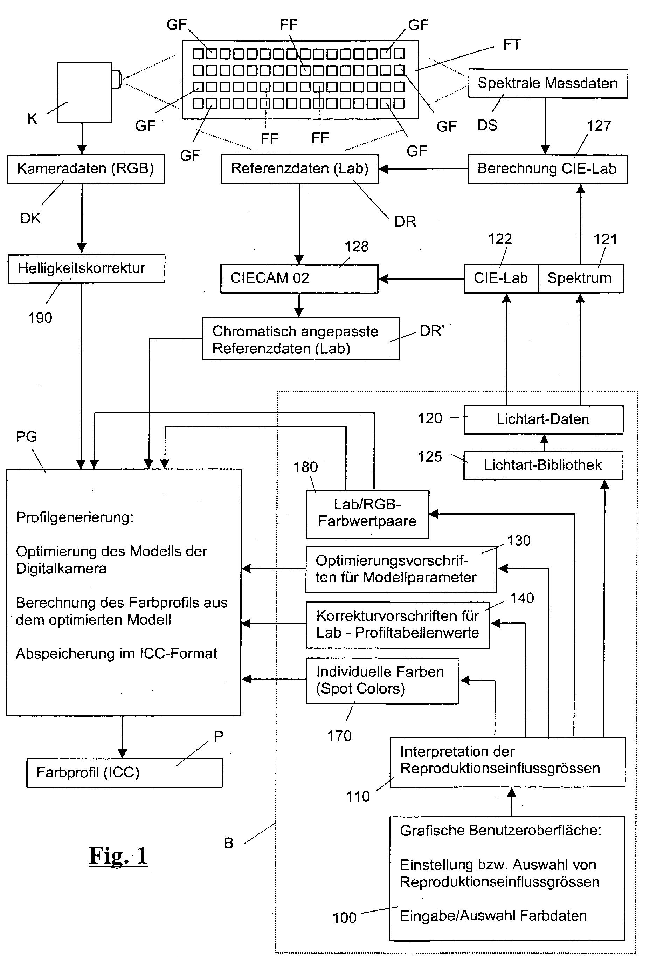

Im Unterschied dazu wird beim erfindungsgemässen Profilerstellungsverfahren auf verschiedene Weise auf die Profilerstellung Einfluss genommen. Einerseits wird dazu in den Profilgenerator bzw. die dort ablaufenden Berechnungen eingegriffen und anderseits werden die berechneten Profildaten gezielt verändert. (Alternativ zur Veränderung der Profildaten können auch die dem Profilgenerator zugeführten Referenzdaten entsprechend verändert werden.) Die für diese Einflussnahmen zuständigen Verfahrensschritte sind in der Fig. 1 durch den strichlierten Kasten B umrahmt. Was und wie dies im einzelnen geschieht, ist weiter unten erläutert.

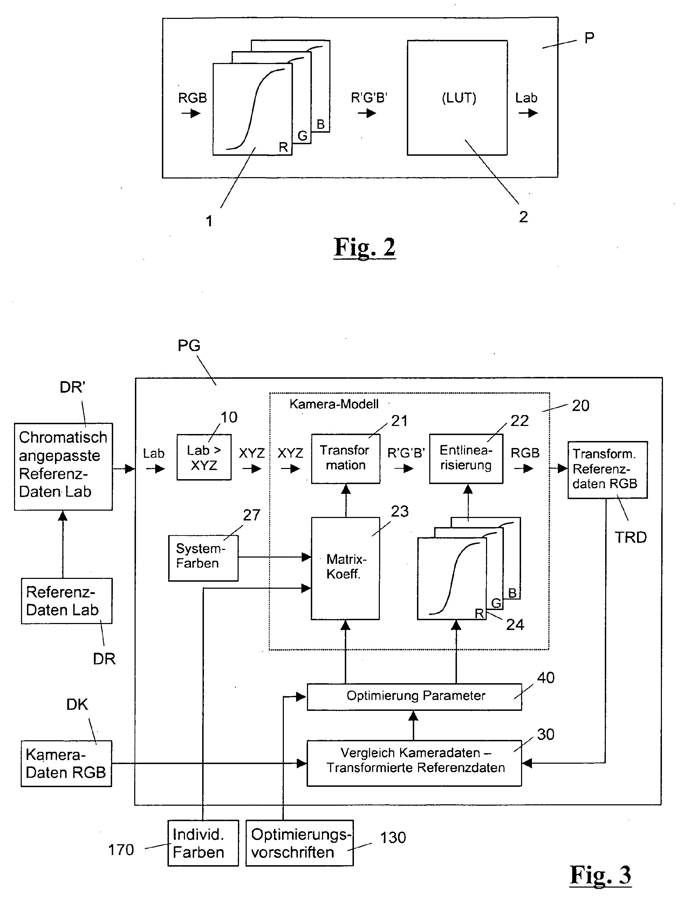

Ein Profil für eine Digitalkamera beschreibt, wie schon eingangs erwähnt, eine eindeutige Transformation von gerätespezifischen RGB-Farbwerten in geräteunabhängige Lab-Farbwerte (Farbkoordinaten). Die prinzipielle Struktur eines solchen Profils ist in der Fig. 2 dargestellt.

Das Profil P besteht im wesentlichen aus drei Linearisierungskurven 1 (eine Kurve pro Farbkanal RGB) und einer Umwandlungstabelle 2 ("look-up table", LUT). Anhand der Linearisierungskurven 1 ("tone reproduction curves", TRC) kann ein das Profil P verarbeitendes, Color-Management-fähiges Anwendungsprogramm die RGB-Daten in linearisierte R'G'B'-Daten überführen. Die Kurven 1 sind als Stützwert-Tabellen mit einer Reihe von Eingangs- und Ausgangswerten implementiert, so dass Zwischenwerte durch (z.B. lineare) Interpolation berechnet werden können.

Die Umwandlungstabelle 2 enthält Stützwerte für eine dreidimensionale Interpolation, mittels welcher das Color-Management-fähige Anwendungsprogramm jede sinnvolle Kombination von (linearisierten) R'G'B'-Farbwerten in eine zugehörige Kombination von Lab-Farbwerten umrechnen kann.

Die Erstellung eines Profils P läuft also im Kern auf die Berechnung der Stützwerte der drei Linearisierungskurven 1 und der Stützwerte der Umwandlungstabelle 2 sowie die Abspeicherung der Linearisierungskurven und der Umwandlungstabelle im standardisierten ICC-Format hinaus. Diese Berechnungen erfolgen im Profilgenerator PG, der in Fig. 3 schematisch dargestellt ist.

Der Profilgenerator PG umfasst in an sich bekannter Weise eine Lab-XYZ-Umrechnungsstufe 10, ein allgemeines mathematisches Modell 20 einer Digitalkamera sowie eine Vergleichsstufe 30 und eine Parameteroptimierungsstufe 40. Das Kamera-Modell 20 besteht aus einer Transformationsstufe 21 und einer Entlinearisierungsstufe 22 sowie einer Transformationstabelle 23 und drei Entlinearisierungskurven 24 (je eine pro RGB-Farbkanal).

Die Lab-XYZ-Umrechnungsstufe 10 rechnet die ihr zugeführten Lab-Referenzdaten DR bzw. chromatisch angepassten Referenzdaten DR' gemäss den CIE-Normen in entsprechende XYZ-Farbwerte um. Die Transformationstabelle 23 enthält die Koeffizienten einer Anzahl von 3*3-Transformationsmatrizen, anhand welcher die Transformationsstufe 21 die XYZ-Farbwerte durch Vektor-Matrix-Multiplikation in entsprechende linearisierte R'G'B'-Farbwerte umgerechnet. Der XYZ-Farbraum ist dabei in mehrere Regionen (Farbraumbereiche) aufgeteilt, und für jede Region ist eine eigene 3*3-Transformationsmatrix vorgesehen. Die Farbraumbereiche sind durch einen Satz von z.B. 10 System-Farben 27 definiert, welche im wesentlichen gleichmässig über den gesamten Farbraum verteilt sind. Die Entlinearisierungsstufe 22 wandelt schliesslich anhand der drei Entlinearisierungskurven 24 die linearisierten R'G'B'-Farbwerte in die RGB-Farbwerte des geräteabhängigen RGB-Farbraums um. Die Entlinearisierungskurven 24 sind als Stützwert-Tabellen mit einer Reihe von Eingangs- und Ausgangswerten implementiert, so dass Zwischenwerte durch (z.B. lineare) Interpolation berechnet werden können. Sie entsprechen den Linearisierungskurven 1 des Profils P, wobei jedoch Eingang und Ausgang vertauscht sind.

Mit Hilfe des Kamera-Modells 20 werden die dem Profilgenerator PG zugeführten Lab-Referenzdaten DR bzw. chromatisch angepassten Lab-Referenzdaten DR' in transformierte (RGB-)Referenzdaten TRD umgerechnet. Diese transformierten Referenzdaten TRD werden mit den ebenfalls dem Profilgenerator PG zugeführten (RGB-) Kameradaten DK in der Vergleichsstufe 30 verglichen. Das Kamera-Modell 20 wird nun mittels der Parameteroptimierungsstufe 40 durch Variation seiner Parameter, d.h. der in der Transformationstabelle 23 enthaltenen Matrixkoeffizienten und der Stützwerte der Entlinearisierungskurven 24, ausgehend von erfahrungsmässigen Anfangswerten so lange optimiert, bis es die Lab-Referenzdaten DR bzw. chromatisch angepassten Lab-Referenzdaten DR' möglichst exakt in die RGB-Kameradaten DK transformiert (Vergleichs- bzw. Fehlermass ist normalerweise der Farbabstand). Dabei werden auch die üblichen Reproduktionskriterien (Rendering Intents) berücksichtigt.

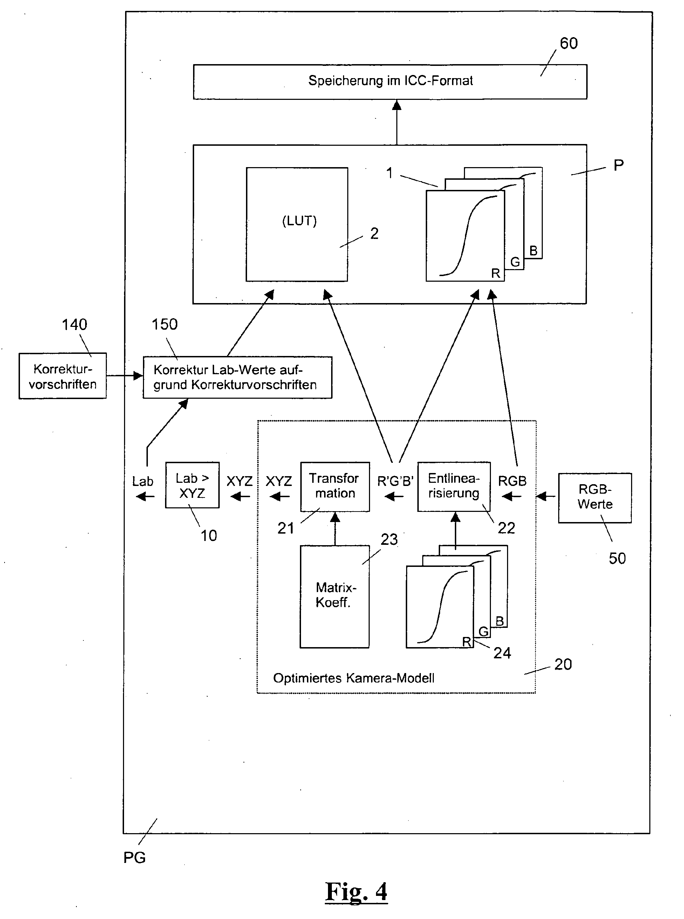

Wenn die Optimierung des Kamera-Modells 20 abgeschlossen ist, wird das optimierte Modell dazu benutzt, aus einer grossen Anzahl von RGB-Farbwerten die zugehörigen linearisierten R'G'B'-Farbwerte, die zugehörigen XYZ-Farbwerte und daraus wieder die zugehörigen Lab-Farbwerte zu berechnen. Dazu wird das Modell in an sich bekannter Weise einfach "in umgekehrter Richtung" betrieben, wie dies in Fig. 4 dargestellt ist. Aus den dabei berechneten Datenwerten wird schliesslich das Profil P in an sich bekannter Weise wie folgt ermittelt: Die z.B. in einer Tabelle 50 bereitgestellten RGB-Farbwerte und die zugehörigen linearisierten R'G'B'-Werte bilden die Stützwerte für die drei Linearisierungskurven 1 des Profils P; die linearisierten R'G'B'-Farbwerte und die zugehörigen Lab-Farbwerte bilden die Stützwerte der Umwandlungstabelle 2 des Profils P. Die Lab-Farbwerte werden gemäss der Erfindung in einer Korrekturstufe 150 noch anhand von Koorekturgrössen korrigiert, darauf wird weiter unten noch näher eingegangen. Letztlich werden dann die Daten des Profils P noch in einer Speicherungsstufe 60 im standardisierten ICC-Format in einer Datei abgespeichert.

Abgesehen von der Korrekturstufe 150 entspricht das erfindungsgemässe Verfahren soweit dem Stand der Technik, so dass also der Fachmann dazu keiner näheren Erläuterung bedarf.

Der Unterschied der Erfindung gegenüber dem bekannten Stand der Technik besteht nun darin, dass dem Anwender die Möglichkeit geboten wird, die Profilberechnung in vielfältiger Weise zu beeinflussen. Gemäss einem wesentlichen Aspekt der Erfindung wird dazu eine vorzugsweise grafische Benutzerschnittstelle bzw. Benutzeroberfläche zur Verfügung gestellt, die die Eingabe bzw. Veränderung bzw. Auswahl von für den Benutzer verständlichen bzw. von der klassischen analogen Fotografie her bekannten Reproduktionseinflussgrössen erlaubt. Diese vom Benutzer eingestellten bzw. ausgewählten Reproduktionseinflussgrössen werden dann in die Profilberechnung in Form von entsprechenden Berechnungsvorschriften für die Parameter (Entlinearisierungskurven 24, Matrixkoeffizienten der Transformationstabelle 23) des mathematischen Kamera-Modells 20 und/oder Korrekturen der CIE-Lab-Farbwerte in der Umwandlungstabelle 2 des Profils einbezogen, wobei sich der Anwender keine Gedanken darüber zu machen braucht, wie und auf welche Weise seine Einstellungen bzw. Auswahlen konkret in die Profilberechnung eingreifen.

Die Fig. 1 verdeutlicht dies. In der Benutzeroberfläche 100 können verschiedene, noch zu beschreibende Einstellungen gemacht bzw. Auswahlen getroffen werden. Diese Einstellungen bzw. Auswahlen werden dann in einer Interpretationsstufe 110 ausgewertet und in Form von Lichtart-Daten 120 und Berechnungsvorschriften 130 für die Parameter (Tabellenwerte der Transformationstabelle 23 und der Entlinearisierungskurven 24) des Kamera-Modells 20 sowie Korrekturvorschriften 140 für die Lab-Farbwerte in der Umwandlungstabelle 2 des Profils P ermittelt und zur Verfügung gestellt. Ausserdem ermöglicht die Benutzeroberfläche 100 noch die Eingabe bzw. Auswahl von gespeicherten individuellen Farben 170 sowie die Eingabe von zusätzlichen Lab/RGB-Farbwertepaaren 180.

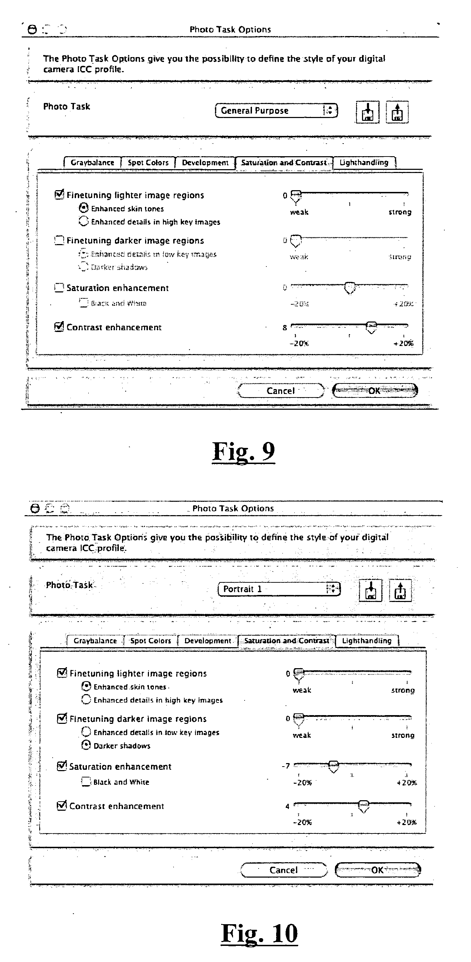

Eine geeignete Benutzeroberfläche weist typischerweise eine Menü-Struktur auf und enthält grafische Eingabe-, Auswahl- und Einstell-Elemente, mit denen die die gewünschten Eingaben gemacht, Auswahlen getroffen bzw. Einstellungen gemacht werden können. Eine beispielsweise Ausgestaltungsmöglichkeit ist in den Figuren 9 und 10 ausschnittsweise dargestellt. Die programmiertechnische Realisierung einer geeigneten grafischen Benutzeroberfläche ist allgemein bekannt und bedarf deshalb keiner weiteren Erläuterung.

Im folgenden werden die wichtigsten gemäss der Erfindung von der Benutzeroberfläche 100 angebotenen Eingabe-, Auswahl- und Einstellmöglichkeiten für benutzerspezifische Reproduktionseinflussgrössen beschrieben. Ferner wird erläutert, wo und wie diese Einflussgrössen auf die Profilberechnung einwirken.

Eine erste Möglichkeit der Einflussnahme besteht in der Auswahl der Lichtart, mit welcher die Kameraaufnahmen erfolgen und für welche das zu erstellende Profil P optimiert sein soll. Die Emissionsspektren 121 verschiedener typischer Lichtarten sind dazu in einer Lichtart-Bibliothek 125 abgespeichert und können mittels der Benutzeroberfläche 100 ausgewählt und über die Interpretationsstufe 110 als Lichtartdaten 120 zur Verfügung gestellt werden. Zusätzlich kann auch die Möglichkeit angeboten werden, eine Lichtart in an sich bekannter Weise mittels eines Spektralfotometers einzumessen und die dabei gewonnenen Emissionsspektren der Lichtart-Bibliothek hinzuzufügen und/ oder direkt als ausgewählte Lichtartdaten 120 zur Verfügung zu stellen.

Die ausgewählten Lichtartdaten 120 werden einerseits, sofern für die Farbfelder FF der Farbtafel FT die spektralen Daten DS vorliegen, in einer Berechnungsstufe 127 zusammen mit diesen spektralen Daten DS zur Berechnung der CIE-Lab-Referenzdaten DR benutzt. Anderseits wird in an sich bekannter Weise mit den CIE-Lab-Werten 122 der Lichtartdaten 120 in der Stufe 128 eine chromatische Anpassung der CIE-Lab-Referenzdaten DR (über die zugrundeliegenden CIE-XYZ-Daten) gemäss dem Color Appearance Model 02 von CIE (CIECAM 02) vorgenommen, wobei die Referenzdaten DR in chromatisch angepasste Referenzdaten DR' übergeführt werden. Diese chromatische Anpassung kann dabei vollständig oder nur teilweise (Erhaltung der "Lichtatmosphäre") erfolgen. Die Benutzeroberfläche 100 bietet dazu eine Einstellmöglichkeit, die sich auf den Parameter D des CIECAM02-Modells auswirkt (Wert 1.0 bzw. 0.8).

Gemäss einem weiteren wichtigen Aspekt der Erfindung werden die Kameradaten DK vor der Einspeisung in den Profilgenerator PG noch einer Helligkeitskorrektur 190 unterzogen, bei welcher eventuelle Ungleichmässigkeiten der Aufnahme (z.B. durch ungleichmässige Ausleuchtung der Farbtafel) kompensiert werden. Zu diesem Zweck wird eine speziell ausgebildete Farbtafel FT verwendet, welche längs ihrer äusseren Ränder mit mehreren gleichen Graufeldern GF (weiss, grau, schwarz) ausgestattet ist. Anhand der RGB-Kameradaten aus diesen speziellen Graufeldern können eventuelle Ungleichmässigkeiten einfach erkannt und dann durch entsprechende Anhebung bzw. Abschwächung der RGB-Werte der eigentlichen Farbfelder FF ausgeglichen werden.

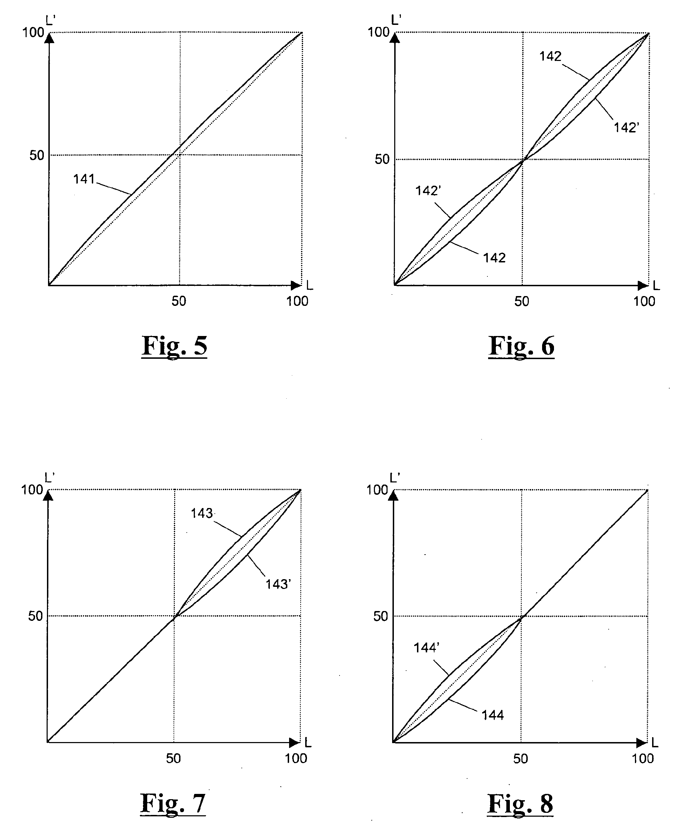

Eine weitere Möglichkeit der Einflussnahme auf die Profilerstellung besteht in der Einstellung des Kontrasts, d.h. der Stärke der Helligkeitsvariation im Verhältnis zu einer Änderung der RGB-Farbwerte im mittleren Helligkeitsbereich. Dazu werden die L-Werte der anhand des optimierten Kamera-Modells 20 berechneten CIE-Lab-Farbwerte für die Umwandlungstabelle 2 des Profils P in der Korrekturstufe 150 (Fig. 4) mit einer in Fig. 6 als Graph dargestellten Transformationsfunktion 142 in L'-Werte transformiert. Wie man erkennt, ist der Graph leicht S-förmig gekrümmt, wobei die Endwerte (L = 0 und L = 100) und der Mittelwert ( L = 50) nicht verändert werden. Für eine Kontrasterhöhung werden dunklere Werte (L < 50) abgeschwächt und hellere Werte (L > 50) erhöht; für eine Kontrasterniedrigung ist es umgekehrt (Kurve 142'). Der Grad der Abschwächung bzw. Erhöhung (die Steigung der Transformationsfunktion 142 im Mittelpunkt (L = 50) kann durch den Benutzer anhand eines entsprechenden, in Kontrast-Einheiten veränderbaren Einstellelements in der Benutzeroberfläche 100 proportional eingestellt werden. Ebenso ist ein Schalter vorgesehen, mittels welchen die Kontrastbeeinflussung ein- und ausgeschaltet werden kann. Die Umsetzung der Kontrast-Einheiten in entsprechende Mittelpunkt-Steigungswerte für die Transformationsfunktion 202 erfolgt in der Interpretationsstufe 110. Die Schalterstellung und die Mittelpunkt-Steigungswerte bilden die die Kontrastbeeinflussung betreffenden Korrekturvorschriften, welche dann in der Korrekturstufe 150 entsprechend umgesetzt werden.

Die Kontrast-Einstellung kann auch noch insofern verfeinert werden, als für helle (L > 50) und dunkle (L < 50) Bereiche eine separate Aktivierungs- und Einstellmöglichkeit vorgesehen wird (Figuren 7 und 8). Dabei wird für jeden Bereich eine eigene Transformationsfunktion 143/143' und 144/144' verwendet, die jeweils nur die helleren bzw. dunkleren L-Werte beeinflusst (erhöht oder erniedrigt), die jeweils anderen L-Werte jedoch unverändert lässt. Als Graph stellen sich diese Transformationsfunktionen also jeweils als obere bzw. untere Hälfte der Transformationsfunktion 142 bzw. 142' dar, die andere Hälfte ist jeweils linear mit einer Steigung von 1. Die Benutzeroberfläche 100 bietet entsprechend separate Aktivierungsschalter und Kontrast-Einstellelemente für helle und dunkle Bereiche. Die Schalterstellungen und Kurvenparameter bilden zusammen wieder Korrekturvorschriften, die in der Korrekturstufe 150 ausgeführt werden.

Die in den Figuren 6-8 als Graphen dargestellten Transformationsfunktionen 142-144 bzw. 142'-144' sind rein beispielsweise zu verstehen. In der Praxis können die Fixpunkte (L = L') auch abweichend gewählt werden. Ferner werden die Transformationsfunktionen in der Praxis mittels Splinefunktionen berechnet, die die Einstellwerte aus der Benutzeroberfläche 100 bzw. der Interpretationsstufe 110 als Parameter verwenden.

Eine weitere Möglichkeit der Einflussnahme besteht in der Einstellung (Erhöhung bzw. Erniedrigung) der Farbsättigung. Bei einem Lab-Farbwert ist darunter der Wert $s = (a^2 + b^2)^{1/2}$ zu verstehen. Bei maximaler Entsättigung (a=0 und b=0) werden alle Farben zu Grauwerten. Für diese Einflussnahme werden die a- und b- Werte der anhand des optimierten Kamera-Modells 20 berechneten Lab-Farbwerte für die Umwandlungstabelle 2 des Profils P in der Korrekturstufe 150 je mit einem Faktor f multipliziert, also

$$a' = f*a \text{ bzw. } b' = f*b$$

Der Faktor f berechnet sich gemäss

$$f = (1 + c*d/100)$$

worin c ein durch die Einstellung eines entsprechenden Einstellelements in der Benutzeroberfläche 100 festgelegter Wert zwischen -100 und +100 und d ein von der Farbsättigung s und dem Einstellwert c abhängiger Wert ist, wobei für Farben mit Farbsättigung s < 50 und Einstellwerte c > 0 die Beziehung d = s/50 und in allen anderen Fällen die Beziehung d = 1 gilt. Der Einstellwert c bzw. der daraus berechnete Faktor f bildet die die Farbsättigungskorrektur betreffende Korrekturvorschrift, die dann in der Korrekturstufe 150 ausgeführt wird.

Eine weitere Möglichkeit der Einflussnahme besteht im Verhalten des Profils bezüglich Grau-Tönen. Die Aktivierung bzw. graduelle Einstellung dieser Option sorgt dafür, dass das zu erstellende Profil (nur) bei wenig gesättigten (d.h. beinahe grauen) Farben eine je nach Einstellung mehr oder weniger starke weitere Reduktion der Farbsättigung vornimmt. Dies wird dadurch erreicht, dass die a- und b- Werte der anhand des optimierten Kamera-Modells 20 berechneten CIE-Lab-Farbwerte für die Umwandlungstabelle 2 des Profils P in der Korrekturstufe 150 je mit einem Faktor g multipliziert werden, also

$$a' = g*a \text{ bzw. } b' = g*b$$

Der Faktor g ist desto kleiner, je kleiner der a-Wert bzw. der b-Wert und ausserdem je kleiner der L-Wert ist. Er berechnet sich nach der Formel

$$g = 1.0/\{1.0 + (0.15 + 0.0085*e)/[0.5*(1.0 + (L/100)^{1/2})*(a^2 + b^2)^2]\}$$

worin e ein durch die Einstellung eines entsprechenden Einstellelements in der Benutzeroberfläche 100 festgelegter Wert zwischen 0 und 100 ist. Der Einstellwert e bzw. die daraus berechneten Faktoren g bilden die das Grauton-Verhalten des Profils betreffende Korrekturvorschrift, die dann in der Korrekturstufe 150 ausgeführt wird.

Eine weitere Möglichkeit der Einflussnahme besteht in der Aktivierung einer sog. Grau-Balance-Option. Die Grau-Balance-Option sorgt dafür, dass das zu erstellende Profil "neutrale" RGB-Farbwerte (R = B = G) in exakt graue Lab-Farbwerte (a=b=0) transformiert. Die wird dadurch realisiert, dass während der Optimierung des Modells 20 der Digitalkamera auf die Parameter-Optimierung in der Parameteroptimierungsstufe 40 Einfluss genommen wird. Dazu werden der Parameteroptimierungsstufe 40 über die Interpretationsstufe 110 als Korrekturvorschrift 130 Rahmenbedingungen für die Variation (und damit bezweckte Optimierung) der Parameter vorgegeben. Konkret bestehen diese Rahmenbedingungen einerseits darin, dass die Summen der Matrix-Koeffizienten 23 in den Spalten jeder Transformationsmatrix gleich bleiben, und anderseits darin, dass nur eine der drei Linearisierungskurven 24 variiert wird und die beiden anderen dieser gleichgesetzt werden. Die Aktivierung der Grau-Balance-Option erfolgt wiederum mittels eines entsprechenden Schaltelements in der Benutzeroberfläche 100.

Eine weitere Möglichkeit der Einflussnahme besteht in der Simulation des sog. "Push-Effekts". In der analogen Fotografie wird darunter die gezielte stufenweise Verlängerung des Entwicklungsprozesses des Fotomaterials verstanden. Um den Push-Effekt zu simulieren, werden die L-Werte der anhand des optimierten Kamera-Modells 20 berechneten Lab-Farbwerte für die Umwandlungstabelle 2 des Profils P in der Korrekturstufe 150 (Fig. 4) mit einer in Fig. 5 als Graph dargestellten Transformationsfunktion 141 in L'-Werte transformiert. Wie man erkennt, werden dabei die Endwerte (L = 0 und L = 100) nicht verändert, alle dazwischen liegenden L-Werte werden erhöht, wobei die maximale Erhöhung etwas oberhalb des Mittelwerts (L = 50) ist. Die Aktivierung des Push-Effekts (ein/aus) sowie der Grad der Erhöhung können durch den Benutzer anhand eines entsprechenden Schalters sowie eines entsprechenden, in Push-Einheiten veränderbaren Einstellelements in der Benutzeroberfläche 100 eingestellt werden. Die Umsetzung der Push-Einheiten in entsprechende Erhöhungsgrade für die Anpassung der Transformationsfunktion 141 erfolgt in der Interpretationsstufe 110. Der Erhöhungsgrad und der Aktivierungszustand stellen die den Push-Effekt betreffende Korrekturvorschrift dar, anhand welcher dann in der Korrekturstufe 150 die entsprechende Korrektur der L-Werte ausgeführt wird.

Eine weitere wichtige Möglichkeit der Einflussnahme besteht in der Optimierung des Profils bezüglich seiner Transformationseigenschaften für individuelle Farben ("Spot Color Optimierung").

Wie schon weiter vorne erwähnt, enthält das Kamera-Modell 20 die Matrix-Koeffizienten 23 für eine Anzahl von 3*3-Transformationsmatrizen, die je für eine Farbe einer Anzahl von im ganzen Farbraum verteilten System-Farben gelten und bei der Optimierung des Modells berechnet werden. Standardmässig werden etwa 10 System-Farben und damit separate Transformationsmatrizen verwendet, wobei diese System-Farben 27 üblicherweise in einer Datei abgespeichert sind. Gemäss einem wichtigen Aspekt der Erfindung können nun diesem Satz von System-Farben bei Bedarf weitere, individuelle Farben 170 (sog. "Spot Colors") hinzugefügt werden, so dass sich die Gesamtanzahl der Farben, für welche separate Transformationsmatrizen berechnet werden, entsprechend erhöht. Diese individuellen Farben sind z.B. durch ihre CIE-Lab-Farbwerte definiert und können entweder manuell eingegeben, aus einer passenden Farb-Datei eingelesen, aus einer Bibliothek von zuvor schon abgespeicherten individuellen Farben entnommen oder ev. auch mittels eines Spektralfotometers eingemessen werden. Die Benutzeroberfläche 100 stellt dazu in an sich bekannter Weise passende Eingabe- bzw. Auswahlfunktionen zur Verfügung.

Bei der Optimierung des Kamera-Modells 20 wird nun zusätzlich zu den System-Farben 27 auch für jede dieser individuellen Farben 170 eine eigene 3*3-Transformationsmatrix berechnet, und zwar so, dass das Modell am besten für diejenigen Farben bzw. Farbfelder FF der Farbtafel FT passt, welche der jeweiligen individuellen Farbe 170 am nächsten kommt. Dies erfolgt so, dass jeder (durch die entsprechenden CIE-Lab-Referenzdaten DR repräsentierten) Farbe in der Farbtafel ein Gewicht G zugeordnet wird, welches mit zunehmendem Farbabstand (ΔE) von der betreffenden individuellen Farbe 170 kleiner wird. Bei der Optimierung des Modells 20 auf die Farben der Farbtafel FT wird der Fehler des Modells für jede Farbe der Farbtafel FT mit dem Gewicht G der betreffenden Farbe multipliziert, so dass der Fehler von Farben in der Nähe der individuellen Farben 170 stärker berücksichtigt wird. Dies führt dazu, dass die optimierten Transformationsmatrizen am besten stimmt für diejenigen Farben, die den individuellen Farben 170 ähnlich (oder gleich) sind.

Nach dieser Optimierung enthält das Modell 20 alle diese Matrizen, welche jeweils für einen (durch die System-Farben 27 und individuellen Farben 170 definierten) Bereich im Farbraum optimal sind. Bei der anschliessenden Anwendung des Modells 20 zur Berechnung der Profiltabellenwerte (Stützwerte der Umwandlungstabelle 2 des Profils P, vgl. Fig. 4) werden die Koeffizienten aller 3*3-Matrizen mit einem Gewicht versehen und zu einer einzigen 3*3-Matrix gewichtet gemittelt. Die Gewichte berechnen sich wieder aus dem Farbabstand der jeweils zu berechnenden Farbe von der individuellen Farbe, für welche die Matrix optimiert wurde, wobei die Gewichte mit zunehmendem Farbabstand kleiner gewählt werden.

Eine weitere Möglichkeit der Einflussnahme besteht schliesslich darin, die Genauigkeit des zu erstellenden Profils für einzelne individuelle Farben noch dadurch zu erhöhen, dass die Farbtafel FT virtuell erweitert wird, d.h. zusätzlich zu den CIE-Lab-Referenzdaten und RGB-Kameradaten der Farbtafel FT noch weitere CIE-Lab/RGB-Farbwertpaare 180 (CIE-Lab-Farbwerte und entsprechende RGB-Kameradaten) für die Profilerstellung herangezogen werden. Diese Farbwertpaare können z.B. über die Benutzeroberfläche 100 manuell eingegeben werden. Vorzugsweise werden dabei die CIE-Lab-Farbwerte dieser Farbwertpaare wie vorstehend unter "Spot Color Optimierung" beschrieben als zu optimierende individuelle Farben 170 zu den System-Farben 27 hinzugefügt und in die Profil-Erstellung mit einbezogen.

Gemäss einem weiteren wichtigen Aspekt der Erfindung werden nun die vorstehend beschriebenen Einflussnahmemöglichkeiten auf die Profilerstellung zu sinnvollen Kombinationen zusammengefasst und dem Anwender mittels der Benutzeroberfläche 100 thematisch gegliedert und unter aussagekräftigen und leicht verständlichen Titeln angeboten. Dabei werden für typische Anwendungsfälle bzw. Situationen Voreinstellungen angeboten, wobei aber der Anwender die Möglichkeit hat, diese Voreinstellungen noch nach individuellen Bedürfnissen zu verändern und ferner auch die geänderten Einstellungen für den späteren Wiedergebrauch abzuspeichern.

Eine übergeordnete thematische Gliederung umfasst z.B. die folgenden Punkte:

Szenen-Licht: Einstellung/Auswahl einer Lichtart

Foto-Aufgabe bzw. Einsatzzweck des Profils

Eine weitere Gliederung bzw. Gruppierung erfolgt nach den typischen fotografischen Aufgabenstellungen bzw. Einsatzzwecken des zu erstellenden Profils (P). Beispiele für vordefinierte Foto-Aufgaben bzw. Einsatzzwecke sind etwa Portrait, Landschaft, Produkt etc..

Eine zusätzliche Gruppierung der Reproduktionseinflussgrössen bzw. Einflussnahmemöglichkeiten kann nach den durch sie beeinflussten Eigenschaften des Transformationsverhaltens des zu erstellenden Profils (P) erfolgen. Dazu können die einzelnen Foto-Aufgaben z.B. nach folgenden Themen gegliedert sein:

Grau-Balance: Grau-Balance und Neutralisierung grau-naher Farben
Sonderfarben: Spot Colors und Farbtafelerweiterung
Entwicklung: Push-Effekt-Simulation
Sättigung/Kontrast: alle Einstellmöglichkeiten bez. Farbsättigung und Kontrast
Szenen-Licht: Einstellung der chromatischen Anpassung

Für jede Foto-Aufgabe wird ein Satz von Parametern gespeichert, der die für die betreffende Foto-Aufgabe erfahrungsgemäss günstigen Voreinstellungen der Auswahl- und Einstellungsmöglichkeiten für die Reproduktionseinflussgrössen festlegt. Durch Auswahl einer Foto-Aufgabe in der grafischen Benutzeroberfläche 100 werden der zugehörige Parametersatz geladen und die Auswahl- und Einstellungselemente der Benutzeroberfläche entsprechend initialisiert. Die Figuren 9 und 10 illustrieren dies rein beispielsweise.

In Fig. 9 befindet sich der Anwender in der Rubrik "Foto-Aufgaben" ("Photo Task Options") und hat darin die vordefinierte Aufgabe "General Purpose" ausgewählt; er möchte also ein Allzweck-Kamera-Profil erstellen. Unter dem Thema "Sättigung und Kontrast" ("Saturation and Contrast") werden ihm dabei die folgenden Voreinstellungen angeboten:

Die Kontrast-Feineinstellung hellerer Farben ("Fine tuning lighter image regions") ist aktiviert, wobei Hauttöne schwach verstärkt werden ("Enhanced skin tones"). Dies entspricht einer schwach eingestellten Korrektur gemäss der Kurve 143 in Fig. 7. Die Kontrast-Feineinstellung dunklerer Farben ("Fine tuning darker image regions") gemäss Fig. 8 ist deaktiviert. Die generelle Kontrast-Verstärkung ("Contrast enhancement") ist aktiviert und auf 8% eingestellt (Kurve 142 in Fig. 6). Die Korrektur der Farbsättigung ("Saturation enhancement") ist deaktiviert.

In Fig. 10 befindet sich der Anwender ebenfalls in der Rubrik "Foto-Aufgaben" und hat darin die vordefinierte Aufgabe "Portrait 1" ausgewählt; er möchte also ein speziell für Portrait-Aufnahmen optimiertes Kamera-Profil erstellen. Unter dem Thema "Saturation and Contrast" werden ihm diesmal die folgenden Voreinstellungen angeboten:

Die Kontrast-Feineinstellung hellerer Farben ist aktiviert, wobei Hauttöne schwach verstärkt werden. Dies entspricht einer schwach eingestellten Korrektur gemäss der Kurve 143 in Fig. 7. Die Kontrast-Feineinstellung dunklerer Farben ist ebenfalls aktiviert, wobei dunklere Schattenbereiche ("Darker shadows") schwach aufgehellt werden. Dies entspricht einer schwach eingestellten Korrektur gemäss der Kurve 144' in Fig. 8. Die generelle Kontrast-Verstärkung ist aktiviert und auf 4% eingestellt (Kurve 142 in Fig. 6). Die Korrektur der Farbsättigung ist aktiviert und auf 7% Abschwächung eingestellt. (Die Aktivierung der Option "Black and White" würde eine totale Entsättigung der Farben bewirken, also bei der Anwendung des Profils zu einem Schwarz/Weiss-Bild führen.)

In analoger Weise sind auch bei den übrigen Themen ("Gray Balance", "Spot Colors", "Development", "Light Handling") passende Voreinstellungen getroffen.

Der Anwender kann nun diese Voreinstellungen übernehmen oder, wie schon erwähnt, nach seinen persönlichen Bedürfnissen ändern. Dabei wird ihm auch die Möglichkeit geboten, die geänderten Auswahlen bzw. Einstellungen unter demselben oder einem anderen Namen für die Foto-Aufgabe zu speichern. Bei Speicherung unter demselben Namen wird der zugehörige Parameter-Satz verändert, bei Speicherung unter einem anderen Namen wird ein neuer Parameter-Satz angelegt.

Durch die Gruppierung der Einflussnahmemöglichkeiten nach typischen Anwendungsfällen bzw. fotografischen Aufgabenstellungen und Zusammenfassung verwandter Einflussnahmemöglichkeiten und Bezeichnung derselben mit dem Anwender geläufigen Begriffen wird die praktische Anwendung des erfindungsgemässen Verfahrens sehr erleichtert. Mit dem erfindungsgemässen Verfahren kann der Anwender empfindungsmässige und individual-geschmackliche Aspekte der Farbreproduktion sowie aus der klassischen analogen Fotografie bekannte Einflussnahmen auf die Farbreproduktion auf einfache und intuitive Weise vornehmen und in die Profilerstellung einfliessen lassen.

**Patentansprüche**

**1.** Verfahren zur Erstellung eines Farbprofils für eine Digitalkamera unter Verwendung von Referenzdaten und Kameradaten und eines durch veränderbare Parameter definierten mathematischen Modells der Digitalkamera, wobei die Referenzdaten (DR) Farbwerte von Farbfeldern einer Farbtafel (FT) bezüglich eines geräteunabhängigen Farbraums und die Kameradaten (DK) von der Digitalkamera bei der Aufnahme der Farbtafel produzierte Farbwerte der Farbfelder der Farbtafel bezüglich des gerätespezifischen Farbraums der Digitalkamera (K) darstellen und wobei das Modell (20) der Digitalkamera Farbwerte bezüglich des geräteunabhängigen Farbraums in Farbwerte des gerätespezifischen Farbraums der Digitalkamera transformiert, bei welchem Verfahren die Referenzdaten (DR) anhand des Modells (20) der Digitalkamera in den gerätespezifischen Farbraum der Digitalkamera transformiert werden, das Modell (20) durch Variation seiner Parameter so optimiert wird, dass die transformierten Referenzdaten (TRD) unter Berücksichtigung von Reproduktionkriterien möglichst exakt mit den Kameradaten (DK) übereinstimmen, und schliesslich das Farbprofil (P) anhand des optimierten Modells der Digitalkamera gebildet wird, **dadurch gekennzeichnet, dass** eine vorzugsweise grafische Benutzeroberfläche (100) zur Verfügung gestellt wird, die die Eingabe bzw. Einstellung bzw. Auswahl von das Transformationsverhalten des zu erstellenden Profils (P) charakterisierenden Reproduktionseinflussgrössen erlaubt, dass aus den eingegebenen bzw. eingestellten bzw. ausgewählten Reproduktionseinflussgrössen entsprechende Optimierungsvorschriften (130) für die Optimierung der Parameter (23,24) des Modells (20) der Digitalkamera und/oder entsprechende Korrekturvorschriften (140) für die Tabellenwerte (2) des Profils (P) ermittelt werden, und dass die Optimierung der Parameter (23,24) des Modells (20) der Digitalkamera anhand dieser Optimierungsvorschriften (130) durchgeführt wird und die Tabellenwerte (2) des Profils (P) gemäss diesen Korrekturvorschriften (140) verändert werden.

2. Verfahren nach Anspruch 1, **dadurch gekennzeichnet, dass** in der Benutzeroberfläche (100) verschiedene Reproduktionseinflussgrössen zu thematischen Gruppen zusammengefasst und dem Anwender mit erfahrungsbasierten Voreinstellungen zur Auswahl bzw. individuellen Einstellung angeboten werden.

3. Verfahren nach Anspruch 2, **dadurch gekennzeichnet, dass** die Reproduktionseinflussgrössen nach typischen fotografischen Aufgabenstellungen bzw. Einsatzzwecken des zu erstellenden Profils (P) gruppiert werden.

4. Verfahren nach einem der vorangehenden Ansprüche, **dadurch gekennzeichnet, dass** die Reproduktionseinflussgrössen ggf. zusätzlich nach den durch sie beeinflussten Eigenschaften des Transformationsverhaltens des zu erstellenden Profils (P) gruppiert werden.

5. Verfahren nach einem der vorangehenden Ansprüche, **dadurch gekennzeichnet, dass** die Kameradaten (DK) der Farbtafel (FT) einer Helligkeitskorrektur (190) unterzogen werden, welche Ungleichmässigkeiten bei der Aufnahme der Farbtafel mit der Digitalkamera (K) kompensiert.

6. Verfahren nach Anspruch 5, **dadurch gekennzeichnet, dass** eine Farbtafel (FT) verwendet wird, die an ihren äusseren Rändern mehrfache Graufelder (GF) aufweist, und dass die Helligkeitskorrektur (190) aufgrund der von diesen Graufeldern (GF) stammenden Kameradaten (DK) erfolgt.

7. Verfahren nach einem der vorangehenden Ansprüche, **dadurch gekennzeichnet, dass** das Kontrastverhalten des Profils (P) im Sinne einer gesamthaften Kontrastverstärkung oder Kontrastverminderung eingestellt wird.

8. Verfahren nach einem der vorangehenden Ansprüche, **dadurch gekennzeichnet, dass** das Kontrastverhalten des Profils (P) im Sinne einer Kontrastverstärkung oder Kontrastverminderung für den unteren und den oberen Helligkeitsbereich separat eingestellt wird.

9. Verfahren nach einem der vorangehenden Ansprüche, **dadurch gekennzeichnet, dass** das Farbsättigungsverhalten des Profils (P) im Sinne einer Sättigungsverstärkung oder Sättigungsverminderung eingestellt wird.

10. Verfahren nach einem der vorangehenden Ansprüche, **dadurch gekennzeichnet, dass** Verhalten des Profils (P) bezüglich nahe bei Grau liegenden Farben in dem Sinne eingestellt wird, dass das Profil bei solchen Farben eine Verminderung der Farbsättigung bewirkt.

11. Verfahren nach einem der vorangehenden Ansprüche, **dadurch gekennzeichnet, dass** dass Grau-Balance-Verhalten des Profils (P) in dem Sinne eingestellt wird, dass das Profil neutrale Farben in exakte Grau-Töne transformiert.

12. Verfahren nach einem der vorangehenden Ansprüche, **dadurch gekennzeichnet, dass** ein Push-Effekt eingestellt wird, welcher das Verhalten des Profils (P) in dem Sinne beeinflusst, dass es eine Helligkeitsanhebung im mittleren Helligkeitsbereich bewirkt.

13. Verfahren nach einem der vorangehenden Ansprüche, **dadurch gekennzeichnet, dass** eine Lichtart eingestellt wird und das Profil (P) für die eingestellte Lichtart optimiert wird.

**14.** Verfahren nach einem der vorangehenden Ansprüche, **dadurch gekennzeichnet, dass** die Referenzdaten (DR) an eine eingestellte Lichtart chromatisch angepasst werden, wobei der Anpassungsgrad eingestellt wird.

**15.** Verfahren nach einem der vorangehenden Ansprüche, **dadurch gekennzeichnet, dass** mindestens eine nicht in der Farbtafel (FT) enthaltene Sonderfarbe (170) für die Optimierung des Modells (20) der Digitalkamera herangezogen wird.

**16.** Verfahren nach einem der vorangehenden Ansprüche, **dadurch gekennzeichnet, dass** mindestens ein nicht von der Farbtafel (FT) stammendes RGB/CIE-Lab-Farbwertepaar (180) zur Optimierung des Modells (20) der Digitalkamera herangezogen wird.

**Fig. 1**

**Fig. 2**

**Fig. 3**

60

Speicherung im ICC-Format

1

(LUT)

2

B

G

R

P

140

Korrekturvorschriften

150

Korrektur Lab-Werte aufgrund Korrekturvorschriften

Lab

Lab >
XYZ

10

XYZ

XYZ

Transfor
mation

21

R'G'B'

Entlinearisierung

22

RGB

RGB-
Werte

50

Matrix-
Koeff.

23

B

G

R

24

Optimiertes Kamera-Modell

20

PG

**Fig. 4**

**Fig. 5**

**Fig. 6**

**Fig. 7**

**Fig. 8**

⊖ ◌ ◌          Photo Task Options

The Photo Task Options give you the possibility to define the style of your digital
camera ICC profile.

Photo Task                 [ General Purpose    :◆ ]   [📥]   [📤]

| Graybalance | Spot Colors | Development | Saturation and Contrast | Lighthandling |

☑ Finetuning lighter image regions       0
     ◉ Enhanced skin tones               weak             strong
     ○ Enhanced details in high key images

☐ Finetuning darker image regions       0
     ○ Enhanced details in low key images    weak             strong
     ○ Darker shadows

☐ Saturation enhancement           0
     ☐ Black and White                -20%              +20%

☑ Contrast enhancement         8
                              -20%              +20%

( Cancel )    ( OK )

## Fig. 9

⊖ ◌ ◌          Photo Task Options

The Photo Task Options give you the possibility to define the style of your digital
camera ICC profile.

Photo Task                 [ Portrait 1    :◆ ]   [📥]   [📤]

| Graybalance | Spot Colors | Development | Saturation and Contrast | Lighthandling |

☑ Finetuning lighter image regions       0
     ◉ Enhanced skin tones               weak             strong
     ○ Enhanced details in high key images

☑ Finetuning darker image regions       0
     ○ Enhanced details in low key images    weak             strong
     ◉ Darker shadows

☑ Saturation enhancement           -7
     ☐ Black and White                -20%              +20%

☑ Contrast enhancement         4
                              -20%              +20%

( Cancel )    ( OK )

## Fig. 10

15

# EP 1 536 630 A1

Europäisches Patentamt

**EUROPÄISCHER RECHERCHENBERICHT**

Nummer der Anmeldung

EP 03 02 7377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | "Pictographics inCamera Professional 3" COMPUTER-DARKROOM, [Online] 2001, XP002278169 Gefunden im Internet: <URL:www.computer-darkroom.com/incamera/incamera.htm and .../incamera_2.htm> [gefunden am 2004-04-27] * das ganze Dokument * --- | 1-16 | H04N1/60 |
| X | US 6 037 950 A (MEIR ISRAEL ET AL) 14. März 2000 (2000-03-14) * Spalte 7, Zeile 4 - Spalte 8, Zeile 40 * --- | 1-16 | |
| X | MONACO SYSTEMS: "MonacoDCcolor User Guide" MONACO SYSTEMS, [Online] September 2002 (2002-09), XP002278170 Gefunden im Internet: <URL:www.monacosys.com/guides.html> [gefunden am 2004-04-27] * Seite 25 * --- | 1 | RECHERCHIERTE SACHGEBIETE (Int.Cl.7) |
| A | EP 0 817 470 A (FUJIFILM ELECTRONIC IMAGING LI) 7. Januar 1998 (1998-01-07) * Spalte 3, Zeile 3-10 * ----- | 1 | H04N |

Der vorliegende Recherchenbericht wurde für alle Patentansprüche erstellt

| Recherchenort | Abschlußdatum der Recherche | Prüfer |
|---|---|---|
| DEN HAAG | 27. April 2004 | Hardell, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes Dokument

EPO FORM 1503 03.82 (P04C03)

16

**ANHANG ZUM EUROPÄISCHEN RECHERCHENBERICHT
ÜBER DIE EUROPÄISCHE PATENTANMELDUNG NR.**

EP 03 02 7377

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2004

| Im Recherchenbericht angeführtes Patentdokument | Datum der Veröffentlichung | Mitglied(er) der Patentfamilie | Datum der Veröffentlichung |
|---|---|---|---|
| US 6037950 A | 14-03-2000 | WO 9848569 A1 | 29-10-1998 |
| EP 0817470 A | 07-01-1998 | DE 69724200 D1<br>DE 69724200 T2<br>EP 0817470 A1<br>JP 10079023 A<br>US 5933254 A | 25-09-2003<br>26-02-2004<br>07-01-1998<br>24-03-1998<br>03-08-1999 |

EPO FORM P0461

Für nähere Einzelheiten zu diesem Anhang : siehe Amtsblatt des Europäischen Patentamts, Nr.12/82